(19) Europäisches Patentamt
European Patent Office
Office européen des brevets

(11) Veröffentlichungsnummer: **0 172 432**
**A2**

(12) # EUROPÄISCHE PATENTANMELDUNG

(21) Anmeldenummer: 85109218.9

(22) Anmeldetag: 23.07.85

(51) Int. Cl.⁴: A 23 B 4/02
A 23 B 4/14

(30) Priorität: 25.08.84 DE 3431307

(43) Veröffentlichungstag der Anmeldung:
26.02.86 Patentblatt 86/9

(84) Benannte Vertragsstaaten:
AT BE CH DE FR GB IT LI LU NL SE

(71) Anmelder: Van Hees GmbH
Veilchenweg 2
D-6229 Walluf 1(DE)

(72) Erfinder: Gillet, Joel, Dipl.-Ing.
Rebenstrasse 7
D-6200 Wiesbaden-Breckenheim(DE)

(74) Vertreter: Röbe-Oltmanns, Georg, Dr.
Dotzheimer Strasse 61
D-6200 Wiesbaden(DE)

(54) **Verfahren zum Herstellen von gepökeltem Fleisch und Fleischerzeugnissen.**

(57) Die Erfindung betrifft ein Verfahren zum Herstellen von gepökeltem Fleisch und Fleischerzeugnissen, die mit Nitritpökelsalz behandelt werden, beispielsweise Brühwurst, wobei bei der Herstellung ein oder mehrere Katalysatoren in Verbindung mit Ascorbinsäure oder den Derivaten der Ascorbinsäure verwendet werden.

Es ist Aufgabe der Erfindung, gegenüber bekannten Verfahren die Reaktionsgeschwindigkeit zur Stabilisierung der Umrötung sowie der Konservierung der Erzeugnisse und die zur Herstellung einer stabilen Umrötung notwendigen Mengen an Nitrit und Nitrat weiter zu verringern.

Gelöst wird die Aufgabe dadurch, daß als Katalysatoren gleichzeitig Ascorbinsäure-Oxydase und ummantelte organische Säure verwendet werden.

EP 0 172 432 A2

Anmelderin: Firma Van Hees GmbH, Veilchenweg 2, 6229 Walluf 1

## Verfahren zum Herstellen von gepökeltem Fleisch und Fleischerzeugnissen

Die Erfindung bezieht sich auf ein Verfahren zum Herstellen von gepökeltem Fleisch und Fleischerzeugnissen, die mit Nitritpökelfleisch behandelt werden, beispielsweise Brühwurst, wobei bei der Herstellung ein oder mehrere Katalysatoren in Verbindung mit Ascorbinsäure oder den Derivaten der Ascorbinsäure verwendet werden.

Die normalerweise zur Herstellung von gepökeltem Fleisch und Fleischerzeugnissen, beispielsweise von Brühwurst verwendeten Mengen an Nitrit bewegen sich in einer Größenordnung von 80 bis 100 ppm. Zahlreiche Studien haben gezeigt, daß unter optimalen Herstellungsbedingungen eine Menge von 50 ppm genügt, um eine befriedigende Umrötung der Erzeugnisse zu erlangen, und das eine Menge von 20 ppm genügt, um das Pökelaroma zu verleihen.

Brühwürste sind Emulsionen aus Fett und Wasser, für die die Proteine im Fleisch als Emulgiermittel wirken. Die Eigenschaften der im Fleisch enthaltenen Proteine als Emulgiermittel sind im Zusammenhang mit dem pH- Wert der zu emulgierenden Masse zu sehen. Je mehr man sich dem isoelektrischen Punkt nähert, desto schwächer ausgeprägt sind diese Eigenschaften. Hingegen muß man bei niedrigeren pH-Werten arbeiten, wenn man eine intensive und beständige Umrötung erreichen möchte. Der niedrige pH-Wert erlaubt

später auch eine bessere Konservierung des Erzeugnisses.

Um die beschriebenen beiden Effekte in Einklang zu bringen, schlägt die Erfindung nach der DE-PS 30 24 807 ein Zusatzmittel für Brühwurstbrät vor, das Ascorbinsäure oder deren Derivate sowie Zitronensäure enthält, wobei die Ascorbinsäure oder deren Derivate in einem Mantel aus wasserlöslichem Material, die Zitronensäure hingegen in einen wasserunlöslichen Fettüberzug eingebettet sind. Bei Zugabe des Zusatzmittels zu Beginn der Brätherstellung wird durch die Feuchtigkeit des Fleisches die Ascorbinsäure oder deren Derivate freigesetzt und eine sichere Emulsionsbildung mit hohem pH-Wert ermöglicht. Nachdem im höheren pH-Wert die [illegible] Emulsionsbildung erreicht wurde, wird bei erhöhter Temperatur der Fettüberzug der Zitronensäure gelöst und die Zitronensäure freigesetzt, wodurch der pH-Wert erniedrigt wird. Die Erfindung nach der DE-PS 30 24 807 weist den Nachteil auf, daß durch das Zusatzmittel die Reaktionsgeschwindigkeit zur Stabilisierung der Umrötung sowie der Konservierung reduziert ist.

Aus der DE-PS 29 26 089 ist ein Verfahren zum Herstellen von gepökelten Fleischprodukten, wobei rohes Fleisch mit einem Pökelmittel versetzt wird, bekannt, bei dem neben Ascorbinsäure oder deren Derivaten Ascorbinsäure-Oxydase verwendet wird. Das dort dargestellte Pökeln in Gegenwart von Ascorbinsäure-Oxydase beinhaltet den Vorteil, daß die Menge an Nitrit im Pökelmittel weitgehend herabgesetzt werden kann und daß die Umrötungsreaktion in relativ kurzer Zeit erfolgt.

Aufgabe der Erfindung ist es, ein Verfahren der o.g. Art zu schaffen, bei dem die Reaktionsgeschwindigkeit zur Stabilisierung der Umrötung sowie der Konservierung weiter verringert sowie die zur Herstellung einer stabilen Umrötung notwendigen Mengen an Nitrit und Nitrat weiter verringert werden.

Gelöst wird die Aufgabe dadurch, daß als Katalysatoren gleichzeitig Ascorbinsäure-Oxydase und ummantelte organische Säure verwendet werden.

Durch die gleichzeitige Verwendung der Ascorbinsäure-Oxydase und der ummantelten organischen Säure kann die organische Säure zu Beginn des Kutterns und während der Zeit, die bis zur Bildung einer beständigen Emulsion verstreicht, nicht den pH-Wert senken. Bevor die Ummantelung der organischen Säure schmilzt, setzt die Ascorbinsäure-Oxydase chemische Reaktionen in Gang. Erst bei erhöhter Temperatur schmilzt die Ummantelung der organischen Säure und diese kann auf die Lösung einwirken. Durch diesen zeitlich gestaffelten Ablauf erhält man ein gut emulgiertes Erzeugnis, wobei die zum Schmelzen notwendige Zeit abgekürzt wird und die Farbe sich schneller entwickelt. Zudem ist eine bessere bakteriologische Konservierung und eine synergetische Wirkung der Ascorbinsäure, Ascorbinsäure-Oxydase und der organischen Säure gegeben. Die Farbe wird stabilisiert,gleichzeit der Restgehalt an Nitrit und die Bildung von Nitrosaminen verringert.

<u>Beispiel</u>: Die am häufigsten verwendeten Zusätze, die die emulgierenden Eigenschaften der im Fleisch enthaltenen Proteine aktivieren, sind:

- Kaliumnitrat
- Natriumnitrit
- Ascorbinsäure und ihre Derivate
- Glucon-delta-Lacton (GdL)
- organische Säuren und deren Salze.

Ausgehend vom Nitrit lassen sich die Reaktionen wie folgt zusammenfassen:

$NO_2$ ----------> NO

Ascorbinsäure → Dehydro-ascorbinsäure

NO + Myoglobin ------------> Nitrosomyoglobin

Nitrosomyoglobin ------------> Globin + Nitrosohäm

Die gleichzeitige Verwendung der Ascorbinsäure-Oxydase und beispielsweise einer ummantelten Zitronensäure bringt folgende Vorteile mit sich:

- zu Beginn des Kutterns und während der Zeit, die bis zur Bildung einer beständigen Emulsion verstreicht, kann die in einer wasserdichten Ummantelung eingeschlossene Zitronensäure nicht in der Wässerungsphase auf die Lösung einwirken und auch nicht den pH-Wert senken.
- Beim Kochen, wenn die Temperatur des Erzeugnisses nahe bei 30° C angelangt ist, setzt die Ascorbinsäure-Oxydase die folgende Reaktion in Gang:

$$NO_2 \longrightarrow NO$$

Dadurch wird die Bindung des Stickstoffoxyds an das Myoglobin beschleunigt. Die verwendeten Mengen schwanken zwischen 20 bis 200 Einheiten pro Kg hergestellter Erzeugnisse, wobei diese vom Kaliber, vom Gehalt an Ascorbinsäure und Nitrit usw. abhängig sind.

- Wenn die Temperatur des Erzeugnisses 40° bis 50° C erreicht hat, wobei die Temperatur abhängig ist von der Art des Fettstoffes, der zur Verkapselung der Zitronensäure verwendet wird, schmilzt die Ummantelung, die die Zitronensäure umgibt, und diese kann auf die Lösung einwirken. Sie kann die Wirksamkeit der Ascorbinsäure durch ihren synergetischen Effekt steigern, sie kann gleichfalls zur Blockierung von Kettenoxydationen beitragen, indem sie die Oxydationskatalysatoren, beispielsweise Eisen, Kupfer usw. an sich bindet.

Die gleichzeitige Verwendung der Ascorbinsäure-Oxydase und der ummantelten Zitronensäure ermöglichen eine Verringerung der zur Herstellung einer bestimmten Menge Nitrosomyoglobin notwendigen Mengen Nitrit.

| | | |
|---|---|---|
| Zum Beispiel: | 50 Einheiten | Ascorbinsäure-Oxydase |
| | 400 ppm | Ascorbinsäure |
| | 500 ppm | ummantelte Zitronensäure |
| | 30 ppm | Natrimnitrit |

ergeben bei konstantbleibenden anderen Parametern die gleiche Umrötung wie

| | | |
|---|---|---|
| | 400 ppm | Ascorbinsäure |
| | 120 ppm | Natriumnitrit |

Das verwendete Enzym hat die folgenden Eigenschaften:

$$\text{Ascorbinsäure} + 1/2\ O_2 \xrightarrow{\text{Ascorbinsäure-Oxydase}} \text{Dehydroascorbinsäure}$$

| | |
|---|---|
| Molekulargewicht | : 132.000 (1), 140.000 (2) |
| Isoelektrischer Punkt | : zwischen 6.0 und 7,8 (1), 8,2 (2) |
| Michaelis-Konstante | : 2,5 x $10^{-4}$ Mol/Liter (Ascorbinsäure-Oxydase) |
| pH-Optimum | : 5,6 |
| Temperaturoptimum | : ungefähr bei 30° C |
| pH-Stabilität | : pH 7,0 - 10.0 (25° C, 17 Stunden) |
| Thermische Stabilität | : 40° C (pH 8,0, 30 Minuten) |
| Substratspezifität | : das Enzym oxydiert die Ascorbinsäure und verschiedene Derivate der Ascorbinsäure |

Folgende Mischungsverhältnisse (Rezepte) wurden verwendet:

- Ascorbinsäure oder Derivate der Ascorbinsäure : 25 %
- ummantelte Zitronensäure : 25 %
- Ascorbinsäure-Oxydase 1.000 U/g : 2,5 %
- übliche Füllstoffe (Zucker und Geschmacksverstärker) : 47,5 %

Anwendungsmenge von 2 g/kg Masse

| | | |
|---|---|---|
| - alkalische Salze der Phosphorsäure oder alkalische Salze der organischen Säuren | : | 60 % |
| - Ascorbinsäure oder Derivate der Ascorbinsäure | : | 10 % |
| - ummantelte Zitronensäure | : | 10 % |
| - Ascorbinsäure-Oxydase 1.000 U/g | : | 1 % |
| - übliche Füllstoffe | : | 19 % |

Anwendungsmenge 5 g/kg Masse

0172432
V1-5355

## Patentansprüche

1.) Verfahren zum Herstellen von gepökeltem Fleisch und Fleischerzeugnissen, die mit Nitritpökelsalz behandelt werden, beispielsweise Brühwurst, wobei bei der Herstellung ein oder mehrere Katalysatoren in Verbindung mit Ascorbinsäure oder den Derivaten der Ascorbinsäure verwendet werden, dadurch gekennzeichnet, daß als Katalysatoren gleichzeitig Ascorbinsäure-Oxydase und ummantelte organische Säure verwendet werden.

2.) Verfahren nach Anspruch 1, dadurch gekennzeichnet, daß die Ascorbinsäure-Oxydase in einer Menge von 20 bis 200 Einheiten pro Kilogramm Fleisch bzw. Fleischerzeugnis verwendet wird.